# EUROPEAN PATENT APPLICATION

(11) **EP 4 737 234 A1**
(43) Date of publication of application: **06.05.2026**
(21) Application number: 25213153.7
(22) Date of filing: 03.11.2025
(51) Int. Cl.: B60T 13/68, B60T 13/00

(54) **HYDRAULIC CIRCUIT OF A WORK OR AGRICULTURAL VEHICLE**

(30) Priority: 04.11.2024 IT 202400024690
(71) Applicant: CNH Industrial Italia S.p.A., 10156 Torino (IT)
(72) Inventor: Garramone, Adriano, 10156 Turin (IT); Liberti, Stefano, 10156 Turin (IT); Gravili, Andrea, 10156 Turin (IT)
(74) Representative: CNH Industrial IP Department

(57) **Abstract**

Hydraulic circuit (HC) for an agricultural or work vehicle, wherein the agricultural or work vehicle comprises at least one working part such as an arm, a hydraulic lift, etc., a braking system (BI) comprising service braking means (7) and parking braking means (3, SAHR), and a user interface (14) for receiving a braking request from a user of the vehicle; wherein the hydraulic circuit comprises a variable displacement hydraulic pump (1), operatively connected to a directional valve assembly (4) for supplying said at least one working member, comprising a discharge valve (2) for recirculating hydraulic oil through cooling means, wherein said braking system comprises at least one braking valve (7) for actuating said service brake, operatively connected to said hydraulic pump, said parking braking means are configured to activate in response to said braking request, when a fault in said service braking means (7) is detected, said discharge valve is set so that an opening pressure threshold of the discharge valve is greater than a maximum supply pressure value of said at least one braking valve (7).

## Description

### Field of the invention

The present invention relates to the field of braking systems of work or agricultural vehicles, in particular to the field of hydraulic braking systems.

### State of the art

Work or agricultural machines are generally equipped with an internal combustion engine, which drives a variable displacement hydraulic pump in rotation, which powers a hydraulic motor operationally connected to the hydraulic pump defining a so-called hydrostat, in which a hydraulic forward line and a hydraulic return line interconnect the hydraulic pump with the hydraulic motor.

The displacement of the hydraulic pump is adjustable and depends on an electrical regulation and on the hydrostatic load perceived by the hydraulic pump itself.

The hydraulic pump of the hydrostat contributes to the braking of the vehicle depending on the position of the brake pedal, realizing the so-called "inching" function or hydrostatic braking.

The service brake includes mechanical friction elements in mutual contact, which, as known, cause the vehicle to slow down when one is pressed against the other, such as the brake pads against a relating disk.

However, the service brake is activated only when the brake pedal is pressed beyond a predetermined position threshold. Starting from the release position of the brake pedal, several consecutive ranges of positions are identified. The first interval is associated with the "brake filling" condition. In these conditions, the hydraulic circuit of the service brake is preloaded, so as to bring the mechanical friction elements into mutual contact, but without the development of any appreciable friction force.

The first interval is divided into two sub-intervals. In the first of the two sub-intervals the brake filling function is performed, and at the same time the "inching" procedure is performed, in which the hydraulic pump of the hydrostat is controlled so as to reduce its displacement proportionally to how much the brake pedal is depressed.

Machines with two friction brakes, one on the front axle and one on the rear axle, are equipped with two separate brake valves.

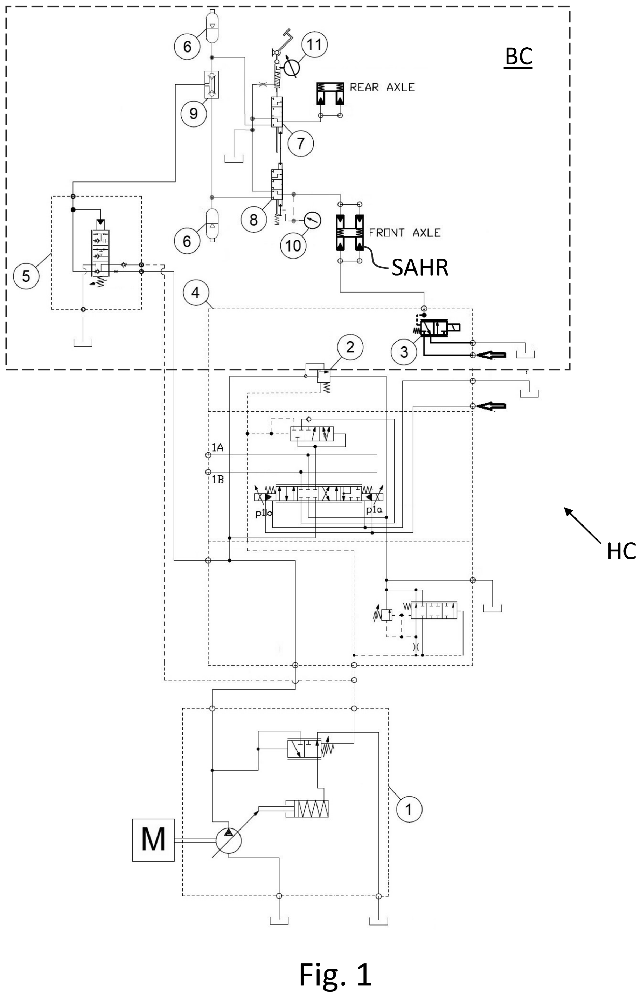

Each brake valve is powered by a dedicated accumulator, this allows in the event of failure of one of the brake valves, to brake the vehicle through the other brake valve which continues to receive oil from its own hydraulic accumulator. Figure 1 shows a hydraulic circuit HC of an agricultural or work vehicle. It comprises a variable displacement "Loading Pump" 1 and a "closed center" directional valve assembly 4 to power a work tool, such as an articulated arm, a hydraulic lift, etc..

The directional valve assembly 4 is controlled by a processing unit (not shown), configured to receive a control signal from a joystick (not shown) and process the control signal to control the valve assembly consequently.

The hydraulic circuit also includes the braking system BC and in particular, a pair of braking valves 7 and 8 powered by two respective accumulators 6 operationally connected to the Loading Pump 1 via a recharging valve 5 which, by means of a hysteresis cycle, recharges the hydraulic accumulators. The braking valves act separately on the front and rear axles of the vehicle, respectively. The shuttle valve 9 is used to retain the oil at both accumulators 6.

It is therefore clear that the hydraulic source of the brake valves 7 and 8 are the hydraulic accumulators and only indirectly the charging pump 1, which supplies the directional valve group 4 and the charging valve 5 in parallel.

The minimum displacement of the charging pump 1 is greater than zero, in order to circulate oil through the cooling system, via the exhaust valve 2 included in the directional valve group 4.

The exhaust valve 2 is operationally connected with at least one radiator, so as to allow the hydraulic oil to cool through the radiator.

The position sensor 11 associated with the stroke of the service brake pedal generates a signal that is used by the processing unit to realize the inching function.

The pressure sensor 10 located on the hydraulic braking line generates a pressure signal used by the processing unit to perform other vehicle functions, including gear shifting, switching on the brake lights, etc.

Valve 3, associated with the SAHR brake (spring applied hydraulic release), is used in ON/OFF mode to control the SAHR parking brake integrated into the front axle.

The SAHR brake generally uses the same disc pack as the front axle brake but is activated by a different control parallel to that of the service brake. It is activated in negative ways, that is, when valve 3 is at rest, the value of the hydraulic pressure in the control circuit is approximately zero and a spring activates the SAHR brake, while when valve 3 is energized the pressure in the circuit becomes greater than the force of the spring and the SAHR brake is deactivated.

EP3868620B1 of the same applicant, describes a scheme in which, in the event of an emergency, the SAHR parking brake is implemented as an emergency brake in support of the failed service brake by means of a proportional control.

It is desirable to reduce the number of components, while ensuring the appropriate reliability and redundancy of the vehicle braking system.

Unless specifically excluded in the detailed description that follows, the description in this chapter is to be considered as an integral part of the detailed description.

### Summary of the invention

The purpose of the present invention is to propose a braking system that has a lower number of components than the prior art scheme, while maintaining the functionality of the prior art braking system.

The basic idea of the present invention is to
- eliminate the hydraulic accumulators, the related shuttle valve and the related recharging valve, so that the charging pump directly supplies the braking valve(s),
- proportionally control the SAHR brake, by means of the service brake control pedal in emergency conditions and
- set the threshold value of the exhaust valve to a pressure threshold value higher than the maximum actuation pressure value of the braking valves.

The new setting of the exhaust valve ensures that the pressure inside the circuit is still sufficient for the operation of the braking valves, even when the variable displacement pump works at minimum displacement.

The hydraulic pump, in the following description, is no longer referred to as a "Charging Pump" as there are no hydraulic accumulators associated with the braking system to be charged.

It is important to highlight that the hydraulic pump of the hydraulic circuit of the present invention is distinct and separate from the hydrostat pump.

In emergency conditions, the SAHR brake, appropriately controlled by a proportional valve, compensates for the failure of the service brake.

Therefore, the proposed braking system has the same degree of redundancy as the prior art system, with a smaller number of components.

From a practical implementation point of view of the invention, the SAHR brake can be controlled by exploiting the signal generated by a sensor associated with the stroke of the service brake pedal, implemented for the inching function.

The control of the SAHR brake, according to the present invention, is performed proportionally to a position of the service brake pedal when a pressure signal, generated by a pressure sensor associated with the service braking means, is representative of a failure condition.

It is worth highlighting that, since emergency conditions are managed through the SAHR braking system, it is not necessary to maintain two separate braking valves for the front and rear axles.

In other words, service braking can be achieved by means of a single braking valve and any differentiation of the braking action can be managed by means of a load distributor.

The dependent claims describe preferred variants of the invention, forming an integral part of this description.

### Brief description of the figures

Further objects and advantages of the present invention will be clear from the detailed description that follows of an example of embodiment thereof (and of variants thereof) and from the attached drawings given purely for explanatory and non-limiting purposes, in which:
Figure 1 schematically shows a braking system of an agricultural or work vehicle according to the prior art;
Figure 2 schematically shows an example of a braking system of an agricultural or work vehicle according to the present invention.

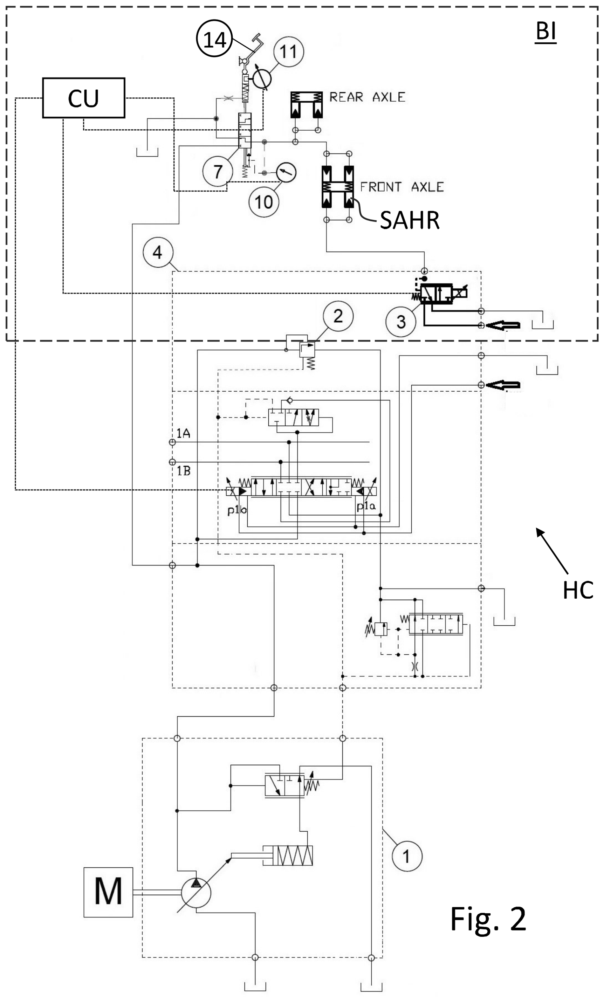

It should be noted that the same reference signs for the common components have been maintained between Figure 1 and Figure 2 in order to allow an easy interpretation of the differences.

The same reference numbers and letters in the figures identify the same elements or components or functions.

It should also be noted that the terms "first", "second", "third", "upper", "lower" and the like may be used here to distinguish various elements. These terms do not imply a spatial, sequential or hierarchical order for the modified elements unless specifically indicated or inferred from the text.

The elements and features illustrated in the various preferred embodiments, including the drawings, may be combined with each other without departing from the scope of protection of this application as described below.

### Detailed description

From the comparison of figures 1, according to the prior art, and Figure 2, of the present invention, it is immediately possible to identify some of the fundamental modifications of the present invention.

The present invention is essentially directed to an agricultural or work vehicle that comprises a valve group 4 to control the movement of at least one work tool, such as an arm, a hydraulic lift, etc..

For this purpose, the vehicle is equipped with a hydraulic circuit HC that comprises at least one variable displacement hydraulic pump 1.

The hydraulic pump is preferably driven in rotation by a prime mover, generally an internal combustion.

The vehicle is also equipped with a transmission, driven by the prime mover, which allows the vehicle to be propelled on a support surface by means of a propulsion device such as a wheel or a track (not shown).

Preferably, the transmission comprises a hydrostat and therefore a further hydraulic pump coupled to a hydraulic motor in a manner known per se. The hydraulic pump of the hydrostat is in any case distinct and separate from the hydraulic pump 1 shown in figures 1 and 2.

The valve group 4 is closed-center directional. This implies that the hydraulic pump 1 has variable displacement and the displacement is appropriately controlled as a function of the hydraulic load perceived by the circuit according to the "load sensing" principle.

The vehicle is also equipped with a braking system BI that includes service braking means 7 and parking braking means 3, SAHR.

The SAHR brake, as described above, is activated in a negative manner, that is, when the valve 3 is at rest (closed), the value of the hydraulic pressure in the control circuit is approximately zero and a spring compress and packs the friction material discs of the SAHR brake. While when the valve 3 is energized, the actuator associated with the SAHR brake opposes the spring packing force and the SAHR brake is deactivated.

The user has a user interface 14, generally in the form of a pedal or brake to activate the service brake.

As is known, the intensity of the braking action is proportional to the position of the brake pedal along a respective stroke.

The valve group 4 comprises a discharge valve 2 arranged to recirculate hydraulic oil through cooling means, such as a radiator. The flow rate through the discharge valve is limited to the value that allows an appropriate circulation of oil through the radiator to allow, even when the same working tool is not in use, to cool the hydraulic oil of the hydraulic circuit HC. For the same reason, the displacement of the hydraulic pump is never zero.

According to the present invention, the braking system BI
- comprises at least one braking valve 7 for actuating the service brake, operatively connected with the hydraulic pump 1,
- the parking braking means are configured to activate in response to the braking request, when a fault in the service braking means 7 is detected,
- the exhaust valve 2 is set so that an opening pressure threshold is greater than a maximum supply pressure value of said at least one braking valve 7.

For simplicity of representation, the reference sign 7 refers to a valve that controls the activation of the service brake, however, by "service brake", it is also meant the hydraulic circuit supplying the same valve up to the friction material, including the hydraulic pump 1 itself.

Generally, a fault in the service brake is detected by measuring the value of the current pressure in the braking system.

Other techniques are also known to detect an emergency condition, i.e. a fault in the service brake. For example, some techniques relate the travel of the brake pedal to the braking action exerted by the service brake to evaluate the actual operating conditions of the service brake.

However, the method for detecting a fault condition in the service brake is of only marginal relevance in the scope of the present invention.

The elimination of the storage tanks and the refill valve according to the prior art scheme leads to the fact that the braking valve 7 is directly connected to the hydraulic pump, which represents the sole source of hydraulic oil for the braking valve 7 and in general for the service braking means.

According to the present invention, similarly to what is described in EP3868620B1, the emergency brake is realized by the same parking brake appropriately adapted to operate proportionally to the position of the brake lever, rather than in a discrete ON/OFF manner. Therefore, the proportional valve 3 is configured to allow the spring to actuate the friction material of the SAHR brake as a proportional function of the position of the brake pedal within the relative travel.

The hydraulic circuit HC is flanked by a processing unit CU operatively connected to at least a first position sensor 11 suitable for detecting the current position of the brake pedal 14 in order to calculate the service braking request and to control the proportional valve 3 of the parking braking means in emergency conditions.

The processing unit CU has the task of monitoring the operating conditions of the service braking means to determine the ordinary or emergency state of the same means.

As anticipated above, the processing unit is operatively connected to a pressure sensor 10 operatively associated with the braking system, for example at a point of the hydraulic line that connects the braking valve 7 with the actuator arranged to pack the friction material of the service brake.

Such a sensor, as described above, can also be used to satisfy further functions and controls for the execution of specific operations.

The invention also concerns an agricultural or work vehicle comprising at least one working member such as an arm, equipped with the hydraulic circuit described above.

The vehicle is preferably equipped with a hydrostatic transmission system, preferably in series configuration, in the sense that the prime mover is connected to a wheel or track exclusively by means of said hydrostatic transmission.

Preferably, the processing unit CU is configured to perform an inching function, performing hydrostatic braking, as a function of said brake pedal position detected by said position sensor 11. Such hydrostatic braking is performed for a portion of the brake pedal stroke, until the service brake defined by friction material is engaged.

Implementing variations to the non-limiting example described are possible, without however departing from the scope of protection of the present invention, including all the embodiments equivalent for a technician in the field, to the content of the claims.

From the description reported above, the technician in the field is able to realize the object of the invention without introducing further construction details.

## Claims

1. Hydraulic circuit (HC) for an agricultural or work vehicle, wherein the agricultural or work vehicle comprises
- at least one working part such as an arm, a hydraulic lift, etc..
- a braking system (BI) comprising service braking means (7) and parking braking means (3, SAHR), and a user interface (14) to receive a braking request from a user of the vehicle;
wherein the hydraulic circuit comprises a variable displacement hydraulic pump (1), operatively connected to + a directional valve assembly (4) for supplying said at least one working member, comprising an exhaust valve (2) for recirculating hydraulic oil through cooling means, + said braking system
- comprising at least one braking valve (7) for actuating said service brake, operatively supplied by the hydraulic pump,
- wherein said parking braking means are configured to activate in response to said braking request, under failure conditions of said service braking means (7),
- wherein said relief valve is set such that an opening pressure threshold is greater than a maximum supply pressure value of said at least one braking valve (7).

2. Circuit according to claim 1, wherein said at least one braking valve (7) is directly connected to the hydraulic pump.

3. A circuit according to claim 1 or 2, wherein said user interface (14) of the service brake (7) is a brake pedal having a stroke range, such that the service braking demand depends on the position of said brake pedal within said stroke range.

4. A circuit according to claim 3, wherein said parking braking means (3, SAHR), comprises friction material adapted to be actuated by a spring and released hydraulically by a proportional valve (3), adapted to modulate the activation of the parking brake release by a hydraulic action in opposition to said effect.

5. A circuit according to claim 4, wherein said proportional valve (3) is controlled proportionally to said brake pedal position within said stroke range.

6. Circuit according to any of the preceding claims, comprising an electronic processing unit (CU) operatively connected to at least one first position sensor (11) adapted to detect the current position of the brake pedal (14) for the purpose of calculating the service braking request and consequently controlling said proportional valve (3) of the parking braking means.

7. A circuit according to any preceding claim, further comprising monitoring means (10) configured to detect said failure in said service braking means (7).

8. A circuit according to claim 7, wherein said monitoring means (10) comprise a pressure sensor operatively associated with said service braking means.

9. A circuit according to any preceding claim, wherein said service braking means (7) comprise friction material and a related hydraulic actuator.

10. An agricultural or work vehicle comprising at least one working member such as an arm, a hydraulic lift, etc. and a hydraulic circuit (HC) for powering
- a braking system (BI) of the vehicle, comprising service braking means (7) and parking braking means (3, SAHR), and a user interface (14) for receiving a braking request from a user of the vehicle;
wherein the hydraulic circuit comprises a variable displacement hydraulic pump (1), operatively connected to + a directional valve assembly (4) for supplying said at least one working member, comprising an exhaust valve (2) for recirculating hydraulic oil through cooling means, + said braking system
- comprising at least one braking valve (7) for actuating said service brake, operatively supplied by the hydraulic pump,
- wherein said parking braking means are configured to activate in response to said braking request, under failure conditions of said service braking means (7),
- wherein said relief valve is set such that an opening pressure threshold is greater than a maximum supply pressure value of said at least one braking valve (7).

11. Vehicle according to claim 10, wherein the hydraulic circuit (HC) complies with any one of claims 1 - 9, and wherein the vehicle is equipped with a hydrostatic transmission.

12. Vehicle according to claim 11, wherein said processing unit (CU) is configured to perform an inching function, performing hydrostatic braking, as a function of said brake pedal position detected by said position sensor (11) according to claim 6.
